# EUROPEAN PATENT SPECIFICATION

(11) **EP 4 474 037 B1**
(45) Date of publication and mention of the grant of the patent: **03.12.2025**
(21) Application number: 23177478.7
(22) Date of filing: 06.06.2023
(51) Int. Cl.: B01D 46/00, B01D 46/12, B01D 46/52, B01D 46/64

(54) **FLAT-FILTER FILTER ELEMENT WITH AT LEAST TWO FILTER MEDIUM BODIES, FILTER SYSTEM AND USE OF A FLAT-FILTER FILTER ELEMENT**
FLACHFILTERFILTERELEMENT MIT WENIGSTENS ZWEI FILTERMEDIUMKÖRPERN, FILTERSYSTEM UND VERWENDUNG EINES FLACHFILTERELEMENTS
ÉLÉMENT FILTRANT À FILTRE PLAT AVEC AU MOINS DEUX CORPS DE MILIEU FILTRANT, SYSTÈME FILTRANT ET UTILISATION D'UN ÉLÉMENT FILTRANT À FILTRE PLAT

(43) Date of publication of application: 11.12.2024
(73) Proprietor: MANN+HUMMEL GmbH, 71636 Ludwigsburg (DE)
(72) Inventor: SCHMID, Daniel, 71636 Ludwigsburg (DE)
(74) Representative: Mann + Hummel Intellectual Property

(56) References cited:
- DE-A1- 102015 007 901
- DE-U- 7 225 224
- US-A1- 2015 273 985

## Description

### Technical Field

The invention relates to a flat-filter filter element for filtering a fluid, in particular for filtering air, for a filter system, in particular for an air filter system of a fuel cell system, as well as to a filter system for filtering a fluid, in particular for filtering air, in particular of a fuel cell system and a use of a flat-filter filter element.

### Prior Art

Fuel cell systems often require a particle filter and an adsorption filter to filter both particles and harmful gases from the intake air. The filter elements are often designed as flat filters, for example, but other filter element shapes also occur.

DE 10 2011 017 444 A1 discloses an exchangeable filter module for flanging onto a wall of a housing that accommodates a fuel cell. The spin-on filter module comprises a filter element with a filter medium. The filter element has a seal which interacts with the housing in the manner of a key-lock connection.

WO 2015/092681 discloses a multi-layered filter element wherein the layers of filtering material making up the filter element are undetachably held together in the filter material, by sealing gaskets of plastic material in which the paper of the layers is partially incorporated. These gaskets perform both the function of preventing air that enters the grooves of the layers from exiting laterally parallel to the ridges and grooves and the function of obtaining a tight seal between the filter element and the walls of the housing receiving the filter element. The gaskets are arranged on the faces of the filter element body that are perpendicular to the bending lines of the paper. In the case of filter elements with prismatic shapes the gaskets are arranged on the opposite flanks perpendicular to the bending lines of the paper.

EP 3 520 878 B1 discloses a filter element for filtering interior compartment air, having at least three filter layers, wherein the filter layers are arranged in a frame, and the frame is assembled from extruded profiled strips. The first filter layer is formed as a pre-filter, the second filter layer is formed as a fine filter and the third filter layer is formed as an adsorption filter. In the frame a region is provided for each filter layer. Each profiled strip has between the second filter layer and the third filter layer a projecting shoulder for separating the second filter layer from the third filter layer in the region of the frame.

US 2015273985 A1 discloses a cabin air filter element for a cabin air filter for the driver's cabin of agricultural and work machines. The cabin air filter element comprises a filter element frame, a prefilter layer, an adsorption filter layer, a fine filter layer, in particular for separation of aerosols. The filter layers substantially are flowed through along a flow direction. The filter element frame comprises two areas. In the first area of the filter element frame, a first effective cross-sectional area with regard to flow through of the taken-in air through the filter layers is provided. In the second area, a corresponding second effective cross-sectional area is provided. Moreover, a circumferentially extending gasket is provided. The circumferentially extending gasket serves for separation of the raw side of the cabin air filter element from the clean side when the cabin air filter element is installed in the filter housing of the cabin air filter. The first area is preferably arranged geometrically upstream relative to the gasket, the second area is preferably arranged geometrically downstream relative to the gasket. The second effective cross-sectional area amounts to only a fraction of the first effective cross-sectional area. The filter layers are fixed to the filter element frame by gluing points.

US 2021276401 A1 discloses a vehicle cabin filter assembly comprising a filter module and a further filter module positioned downstream of the filter module. Each filter module comprises one or more filter elements. The filter elements of the filter module are pleated at a first pleat pitch and comprise a gas filter element. The filter elements of the further filter module are pleated at a second pleat pitch and comprise a particulate filter element. The second pleat pitch is smaller than the first pleat pitch. The filter elements of a filter module are each arranged in a frame. The frame is sealed with a gasket against a module housing in which the filter module is arranged. When installed in a filter housing, the module housing is sealed against the filter housing with a gasket on the end face.

### Disclosure of the Invention

It is an object of the invention to provide a service-friendly and cost-effective flat-filter filter element for filtering a fluid, in particular for filtering air, for a filter system, in particular for an air filter system of a fuel cell system.

Another object is to provide a filter system for filtering a fluid, in particular for filtering air, in particular of a fuel cell system with such a service-friendly and cost-effective flat-filter filter element.

Another object is to provide a use of such a flat-filter filter element in a filter system, for filtering a fluid, in particular for filtering air, in particular for an air filter system of fuel cell system.

According to an aspect of the invention the object is achieved by a flat-filter filter element for filtering a fluid, in particular for filtering air, for a filter system, in particular for an air filter system of a fuel cell system, having an arrangement of at least two flat-filter medium bodies being arranged adjacent to each other in an axial direction, so that the fluid can flow through them one after the other in the axial direction, wherein the flat-filter filter element comprises an overmolded plastic frame that is directly molded to an outer circumference of one of the filter medium bodies, and wherein the other one of the filter medium bodies is sealingly connected to the overmolded plastic frame by means of a circumferential cast element.

According to an aspect of the invention the further object is achieved by a filter system for filtering a fluid, in particular for filtering air, in particular of a fuel cell system, having a filter housing with a fluid inlet and a fluid outlet, and having at least one flat-filter filter element, the filter element being arranged between the fluid inlet and the fluid outlet, wherein a sealing surface of a first housing part of the filter housing abuts a downstream cast element of the flat-filter filter element arranged at the downstream filter medium body, and wherein a housing wall of a second housing part of the filter housing is sealingly pressed against the cast element on an opposite side of the sealing surface.

According to an aspect of the invention the further object is achieved by a use of a flat-filter filter element in a filter system, for filtering a fluid, in particular for filtering air, in particular for an air filter system of a fuel cell system.

Advantageous embodiments are described in the dependent claims, the description and the drawings.

According to an aspect of the invention a flat-filter filter element for filtering a fluid, in particular for filtering air, for a filter system, in particular for an air filter system of a fuel cell system, is proposed, having an arrangement of at least two flat-filter medium bodies being arranged adjacent to each other in an axial direction, so that the fluid can flow through them one after the other in the axial direction. The flat-filter filter element comprises an overmolded plastic frame that is directly molded to an outer circumference of one of the filter medium bodies, and the other one of the filter medium bodies is sealingly connected to the overmolded plastic frame by means of a circumferential cast element.

The proposed filter element can advantageously be used for the intake air of fuel cell systems. An adsorption of harmful gases and particle filtration can advantageously take place in different filter medium bodies. The two filter medium bodies are connected to each other via a common plastic frame. A first filter medium body can be overmolded in a first molding process by the material of the plastics frame thus providing a stable connection of the filter medium body to the frame. A second filter medium body is connected by a cast element to the frame in a second casting process. In particular, the cast element is separate from the overmolded plastic frame. The cast element is manufactured in a second process to the overmolding process of the overmolded plastic frame and in particular is made from a different material. By this arrangement the filter medium bodies are securely connected to each other and to the frame as well as tightly sealed against side flows of the fluid.

The sealing connection of the second filter medium body being positioned upstream of the first filter medium body may advantageously be arranged at an upstream outer edge of the filter medium body. In such an arrangement the filter medium body may be positioned radially inside the frame. Thus both filter medium bodies are enclosed on their circumferential sides by the frame forming a favorable protection and sealing for the filter media. Advantageously, a lateral band for sealing the filter medium bodies on their circumferential sides is not needed. Additionally, the filter element with the two filter medium bodies is provided in a stable arrangement even for larger filter elements.

The filter element can thus advantageously have a frame as a support for the two filter medium bodies. The two filter medium bodies can be firmly connected to the frame. The frame provides additional stability, particularly for larger filter elements.

The frame can advantageously be manufactured by means of a conventional plastic injection molding process, in which liquefied plastic material is injected under pressure into a mold and cured.

In the proposed flat-filter filter element, both filter medium bodies for the two filtration stages are arranged one behind the other in the form of flat-filter medium bodies in the direction of flow of the fluid.

The filter medium body arranged upstream is closer to the upstream side of the filter element than the filter medium body arranged downstream which is arranged closer to the downstream side of the filter element.

The two filter medium bodies can be in the form of folded bellows, coiled bodies, fill (especially for adsorption of harmful gases), coated honeycomb bodies (especially for adsorption of harmful gases), or combinations thereof. The height of the filter medium bodies in the axial direction can be designed differently. The flow through the filter element is such that the filter medium body, which is designed as a particle filter, is always flowed through first. The filter element can be sealed against the filter housing advantageously in the axial direction.

In this way, particles as well as harmful gases can be filtered out of the intake air, for example in fuel cell systems.

The available installation space can thus be utilized in a better way. This results in advantages in terms of adsorption capacity, dust capacity, separation efficiency and pressure drop of the filter element.

According to a favorable embodiment of the filter element, the circumferential cast element may be arranged at an upstream side of the arrangement of the filter medium bodies. Additionally or alternatively a further circumferential cast element may be arranged at a downstream side of the arrangement of the filter medium bodies. In particular the cast elements may be configured as circumferential sealing elements.

The cast elements can be produced by means of a plastic casting process or plastic foaming process, for example from the casting material polyurethane (PUR), in a suitable casting mold. The casting material can be in the form of rigid foam or flexible foam.

The downstream cast element, which is formed as a sealing element, can be designed in such a way that a counterforce of the housing parts provides the seal. The cast element can then be pressed between the housing parts.

Advantageously, the filter medium body arranged outermost upstream in the arrangement of the filter medium bodies may be sealingly connected to the frame by the cast element arranged at the upstream side of the arrangement of the filter medium bodies. By this arrangement the upstream filter medium body is securely connected to the frame as well as tightly sealed against side flows of the fluid.

According to a favorable embodiment of the filter element, the overmolded plastic frame may comprise a protruding section extending in the axial direction from the filter medium body, to which it is molded to, to the other filter medium body, the protruding section surrounding the outer circumference of the other filter medium body. Thus, the arrangement of the at least two filter medium bodies can be realized as a stable configuration fixed by the overlapping overmolded plastic frame.

According to a favorable embodiment of the filter element, the circumferential cast element may be arranged at an upstream edge of the protruding section of the overmolded plastic frame. Thus both filter medium bodies are advantageously arranged in a stable configuration radially inside the overmolded plastic frame enclosed along the axial direction by the upstream and downstream cast elements.

According to a favorable embodiment of the filter element, the filter medium body arranged outermost upstream in the arrangement of the filter medium bodies may be connected to the circumferential cast element at its upstream outer edge. This allows a fixed connection to the frame, which can also be designed as a sealing element for sealing in the filter housing.

According to a favorable embodiment of the filter element, a part of a pleat of the filter medium body which the overmolded plastic frame is directly molded to may be embedded in the overmolded plastic frame. This molding process provides a stable and air tight connection of the filter medium body to the frame.

According to a favorable embodiment of the filter element, an outwardly folded collar may be arranged at the frame at a downstream side of the arrangement of the filter medium bodies. This results in a tight interlocking of the cast element with the frame. Even filter medium bodies with a higher weight and greater expansion thus obtain sufficient stability for mounting in the filter housing.

According to a favorable embodiment of the filter element, the collar may be embedded in the downstream circumferential cast element. Advantageously a tight interlocking of the cast element with the frame may be provided. Even filter medium bodies with a higher weight and greater expansion thus obtain sufficient stability for mounting in the filter housing.

According to a favorable embodiment of the filter element, the frame may comprise breakthroughs in its circumference at least in the region of the upstream and/or downstream side of the arrangement of the filter medium bodies. Due to the breakthroughs for interlocking with the casting material of the cast element, a reliable and durable connection can be made between the cast elements and the frame.

According to a favorable embodiment of the filter element, the outermost downstream filter medium body may comprise an additional filter layer arranged on its downstream side. Favorably, this can prevent adsorption particles from being discharged from the downstream filter medium body by the fluid flow. Preferred designs for the additional filter layer are filter media based on cellulose and/or synthetic fibers, in particular nonwoven materials, and/or filter membranes.

According to a favorable embodiment of the filter element, the outermost upstream filter medium body may be designed as a particle filter. Additionally or alternatively the outermost downstream filter medium body may be designed as an adsorption filter.

In particular, the outermost upstream filter medium body may be made of cellulose. The outermost downstream filter medium body may be designed as an activated carbon filter and/or as an ion exchanger.

According to a favorable embodiment of the filter element, the downstream cast element may be designed as a circumferential sealing element for sealing, in particular in the axial direction, between a raw side and a clean side when the filter element is installed in a filter housing of the filter system as intended. In particular the downstream cast element may be arranged radially outside the at least two filter medium bodies and may be configured for sealing between a first housing part and a second housing part of the filter housing of the filter system. In this way, the downstream cast element can fulfill several functions and be designed both for connecting the downstream filter medium body to the frame and for sealing the filter element to the filter housing. By being arranged outside the two filter medium bodies, the cast element can be effectively pressed between the two housing parts and thus ensure both the seal between the raw side and clean side of the filter system and the seal to the environment.

According to a favorable embodiment of the filter element, at least one of the two filter medium bodies may be formed as a folded filter bellows. End edges of pleats of at least one of the two filter medium bodies may be sealed with an end edge bonding. The end edge bonding may be at least partially embedded into the downstream and/or upstream cast element. The end edge bonding may be arranged using hot melt adhesive, for example. The end edge bonding seals the filter medium body at the side walls, which is particularly favorable in the case of filter medium bodies designed in the form of pleated filter bellows or as fill. Integration into the cast element enables reliable sealing of the filter medium body along the flow path.

According to a further aspect of the invention a filter system for filtering a fluid, in particular for filtering air, in particular of a fuel cell system, is proposed, having a filter housing with a fluid inlet and a fluid outlet, and having at least one flat-filter filter element, the filter element being arranged between the fluid inlet and the fluid outlet. A sealing surface of a first housing part of the filter housing abuts a downstream cast element of the flat-filter filter element arranged at the downstream filter medium body, and a housing wall of a second housing part of the filter housing is sealingly pressed against the cast element on an opposite side of the sealing surface.

The proposed filter system can advantageously be used for the intake air of fuel cell systems. The adsorption and particle filtration can advantageously take place in different filter medium bodies. The filter medium bodies are connected to each other via a common plastic frame. A first filter medium body is overmolded in a first molding process by the material of the plastics frame thus providing a stable connection of the filter medium body to the frame. A second filter medium body is connected by a cast element to the frame in a second casting process. The cast element is manufactured in a second process to the overmolding process of the overmolded plastic frame and in particular is made from a different material. By this arrangement the filter medium bodies are securely connected to each other and to the frame as well as tightly sealed against side flows of the fluid.

The sealing connection of the second filter medium body being positioned upstream of the first filter medium body may advantageously be arranged at an upstream outer edge of the filter medium body. In such an arrangement the filter medium body may be positioned radially inside the frame. Thus both filter medium bodies are enclosed on their circumferential sides by the frame forming a favorable protection and sealing for the filter media. Advantageously, a lateral band for sealing the filter medium bodies on their circumferential sides is not needed. Additionally, the filter element with the two filter medium bodies is provided in a stable arrangement even for larger filter elements.

The filter element can thus advantageously have a frame as a support for the two filter medium bodies. The two filter medium bodies can be firmly connected to the frame. The frame provides additional stability, particularly for larger filter elements.

The frame can advantageously be manufactured by means of a conventional plastic injection molding process, in which liquefied plastic material is injected under pressure into a mold and cured.

In the proposed filter system, both filter medium bodies of the filter element for the two filtration stages are arranged one behind the other in the form of flat-filter medium bodies in the direction of flow of the fluid.

The two filter medium bodies can be in the form of folded bellows, coiled bodies, fill (especially for adsorption of harmful gases), coated honeycomb bodies (especially for adsorption of harmful gases), or combinations thereof. The height of the filter medium bodies in the axial direction can be designed differently. The flow through the filter element is such that the filter medium body, which is designed as a particle filter, is always flowed through first. The filter element can be sealed against the filter housing advantageously in the axial direction.

With the proposed filter system, particles as well as harmful gases can be filtered out of the intake air, for example in fuel cell systems.

The available installation space can thus be utilized in a better way. This results in advantages in terms of adsorption capacity, dust capacity, separation efficiency and pressure drop of the filter element.

According to a favorable embodiment of the filter system, the circumferential frame element may comprise a collar extending in a lateral direction being embedded in the downstream cast element. The collar with the cast element may be pressed between the sealing surface and the end of the housing wall.

The cast element can be designed so that a counterforce of the housing parts provides the seal. The seal can then be compressed between the frame element and the housing parts. By embedding the collar of the frame, the cast element has increased rigidity and the filter element is fixed in the filter housing in a stable manner.

According to a further aspect of the invention a use of a flat-filter filter element in a filter system for filtering a fluid, in particular for filtering air, in particular for an air filter system of a fuel cell system is proposed.

Advantageously, the filter element can be designed as a particle filter and/or as an adsorption filter, in particular as an activated carbon filter and/or as an ion exchanger. Advantageously, particles as well as harmful gases can be filtered out of the intake air, for example in fuel cell systems.

### Brief Description of the Drawings

The present invention together with the above-mentioned and other objects and advantages may best be understood from the following detailed description of the embodiments, but not restricted to the embodiments, wherein is shown in:
- Figure 1: an isometric view of a filter system for filtering a fluid, in particular for filtering air, in particular of a fuel cell system, according to an embodiment of the invention;
- Figure 2: an isometric exploded view of the filter system according to Figure 1;
- Figure 3: an isometric view of a filter element according to an embodiment of the invention;
- Figure 4: a longitudinal cut view of the filter element according to Figure 3 with a marked section V;
- Figure 5: the enlarged section V according to Figure 4; and
- Figure 6: an enlarged section of a cut view of a filter element according to a further embodiment of the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

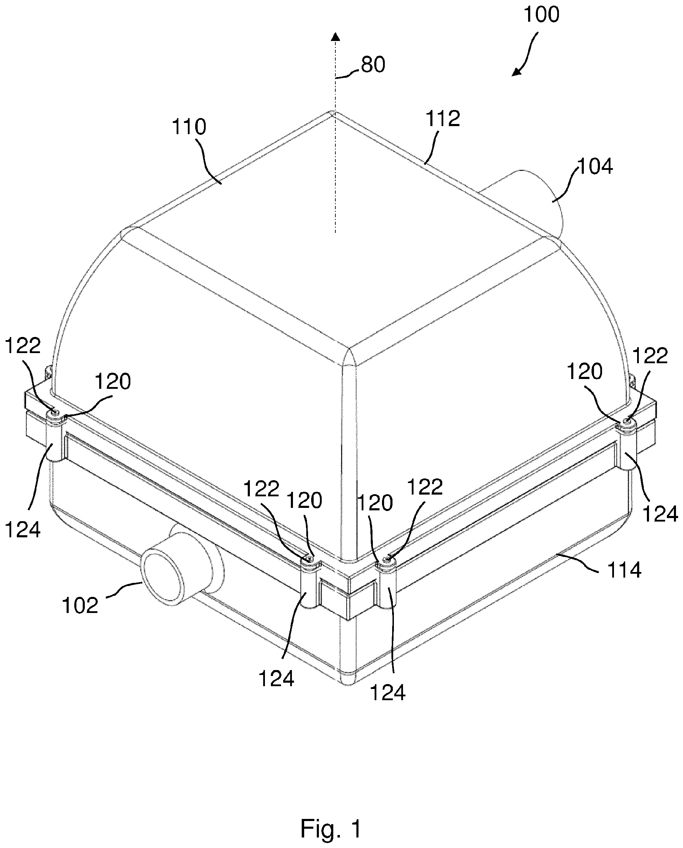

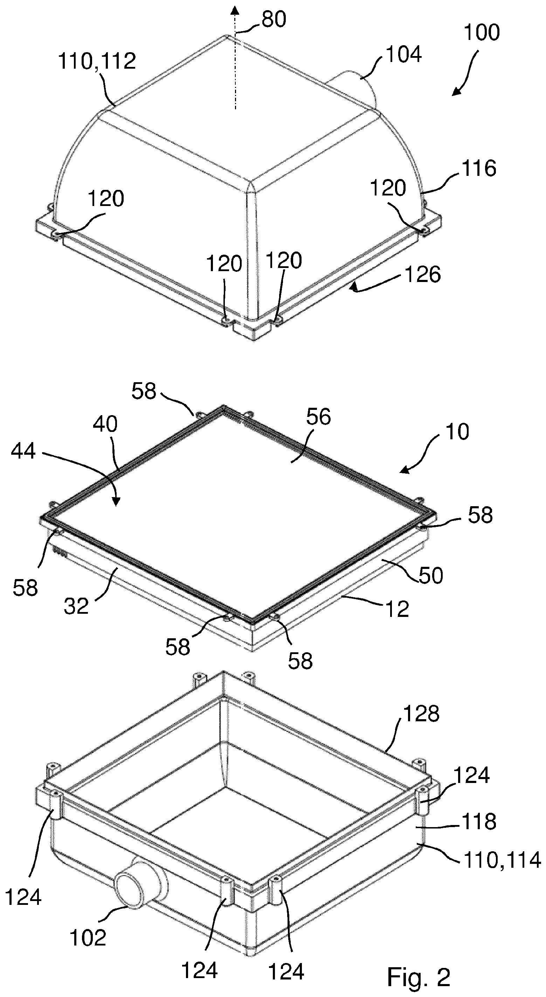

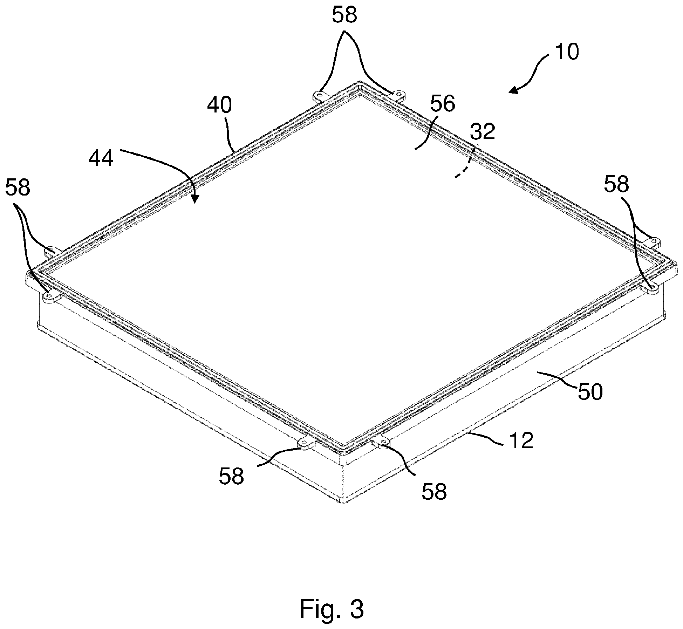

Figure 1 depicts an isometric view of a filter system 100 for filtering a fluid, in particular for filtering air, in particular of a fuel cell system, according to an embodiment of the invention. Figure 2 depicts an isometric exploded view of the filter system 100. Figure 3 shows an isometric view of a filter element 10 according to an embodiment of the invention.

The filter system 100 has a filter housing 110 with a fluid inlet 102 and a fluid outlet 104, and has at least one flat-filter filter element 10, which is arranged between the fluid inlet 102 and the fluid outlet 104. The fluid inlet 102 is positioned in a second housing part 114 and the fluid outlet 104 is positioned in a first housing part 112.

The filter element 10 of the embodiments shown in the Figures each has a circumferential frame 50 with a circumferential cast element 40 formed as an axial sealing element.

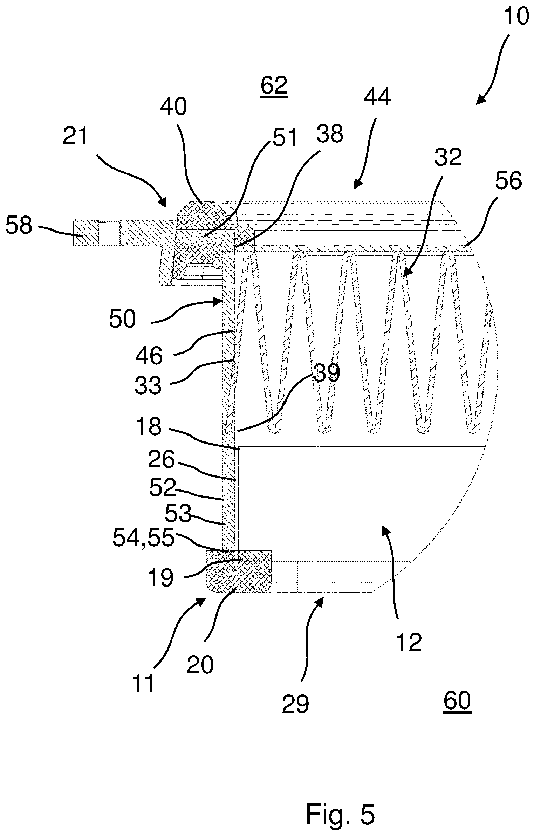

When the filter element 10 is arranged as intended in the second housing part 114 and the filter housing 110 is closed via the first housing part 112, the cast element 40 seals the interior of the filter housing 110 from the environment. At the same time, the cast element 40 seals a raw side 60 inside the filter housing 110 against a clean side 62 (Figure 5).

The downstream side 44 of the filter element 10 is directed towards the first housing part 112 in the direction of the fluid inlet 102.

When the filter element 10 is inserted, bolting tabs 58 of the frame element 50 of the filter element 10 are arranged between screw domes 124 and bolting tabs 120 of the housing wall 116 of the first housing part 112 and screwed together by means of screws 122, as can be seen in Figure 1.

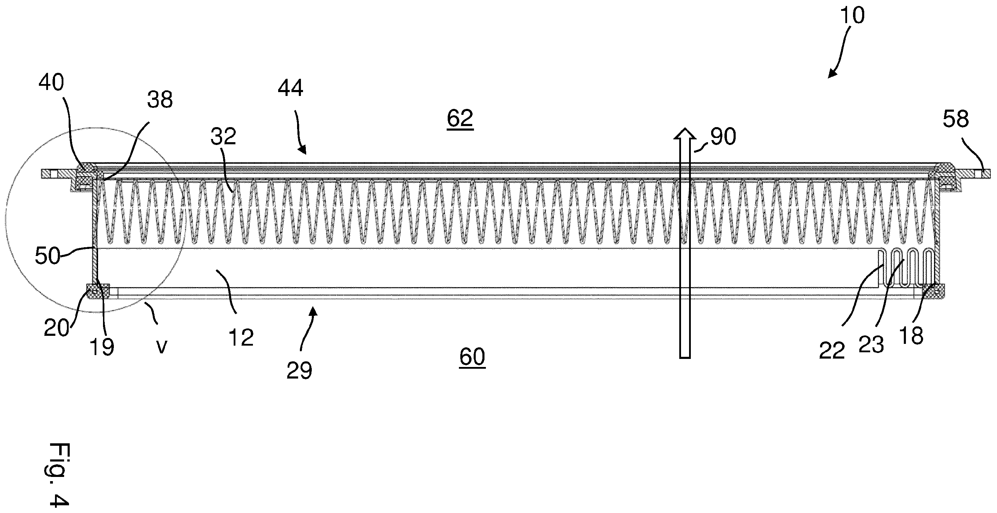

Figure 4 depicts a longitudinal cut view of the filter element 10 according to Figure 3 with a marked section V. Figure 5 shows the enlarged section V according to Figure 4.

The flat-filter filter element 10 has an arrangement of at least two flat-filter medium bodies 12, 32 being arranged adjacent to each other in an axial direction 80, so that the fluid can flow through them one after the other in the axial direction 80. A downstream outer edge 18 of the upstream filter medium body 12 is neighbored to an upstream outer edge 38 of the downstream filter medium body 32.

The flow direction 90 is marked by an arrow in Figure 4.

The outermost upstream filter medium body 12 is designed as a particle filter. The outermost downstream filter medium body 32 is designed as an adsorption filter. Upstream side 29 and downstream side 44 are marked in Figure 5. The fluid enters the filter element 10 from the upstream side 29 and exits the filter element 10 at the downstream side 44.

The filter medium bodies 12, 32 can be formed, for example, as folded filter bellows, and/or as wound bodies, and/or as fill, and/or as coated honeycomb bodies. The particle filter may be formed, for example, from cellulose, and the adsorption filter may be formed, for example, as an activated carbon filter and/or as an ion exchanger. In the embodiment example shown in Figures 4 and 5, both filter medium bodies 12, 32 are formed as pleated filter bellows.

The flat-filter filter element 10 comprises an overmolded plastic frame 50 that is directly molded to an outer circumference 26, 46 of one of the filter medium bodies 12, 32, in this embodiment to filter medium body 32, whereas a part of a pleat 33 of the filter medium body 32, to which the overmolded plastic frame 50 is directly molded to, is embedded in the frame 50 close to the outer edge 39 of the filter element body 32. The other one of the filter medium bodies 12 is sealingly connected to the frame 50. Both filter medium bodies 12, 32 are arranged radially inside the frame 50. For this purpose, a circumferential wall 52 of the frame 50 is designed with a sufficient length.

The overmolded plastic frame 50 comprises a protruding section 53 extending in the axial direction 80 from the filter medium body 32 which it is molded to to the other filter medium body 12. The protruding section 53 surrounds the outer circumference 26 of the other filter medium body 12. The circumferential cast element 20 is arranged at an upstream edge 55 of the protruding section 53.

A circumferential cast element 20 is arranged at an upstream side 11 of the arrangement of the filter medium bodies 12, 32, at an axial end 54 of the frame 50, and a circumferential cast element 40 is arranged at a downstream side 21 of the arrangement of the filter medium bodies 12, 32. In particular, the cast elements 20, 40 are configured as circumferential sealing elements.

The filter medium body 12 arranged outermost upstream in the arrangement of the filter medium bodies 12, 32 is sealingly connected to the frame 50 by the cast element 20 arranged at the upstream side 11 of the arrangement of the filter medium bodies 12, 32. The filter medium body 12 is connected to the circumferential cast element 20 at its upstream outer edge 19.

The downstream cast element 40 is designed as a circumferential sealing element for sealing in the axial direction 80 between a raw side 60 and a clean side 62 when the filter element 10 is installed in a filter housing 110 of the filter system 100 as intended. In particular, the downstream cast element 40 is arranged radially outside the at least two filter medium bodies 12, 32 and is configured for sealing between the first housing part 112 and the second housing part 114 of the filter housing 110 of the filter system 100.

For this purpose, a sealing surface 126 of a first housing part 112 (Figure 2) abuts the downstream cast element 40 arranged at the downstream filter medium body 32, and the housing wall 118 of the second housing part 114 is sealingly pressed against the cast element 40 on an opposite side of the sealing surface 126.

An outwardly folded collar 51 extending in a lateral direction 82 is arranged at the frame 50 at a downstream side 21 of the arrangement of the filter medium bodies 12, 32. The collar 51 is embedded in the downstream circumferential cast element 40. The collar 51 with the cast element 40 is pressed between the sealing surface 126 and the end 128 of the housing wall 118.

Further, the outermost downstream filter medium body 32 comprises an additional filter layer 56 arranged on its downstream side 44 for preventing adsorption particles from being discharged from the downstream filter medium body by the fluid flow. Preferred designs for the additional filter layer 56 are filter media based on cellulose and/or synthetic fibers, in particular nonwoven materials, and/or filter membranes.

Favorably, the frame 50 may comprise breakthroughs in its circumference at least in the region of the upstream and/or downstream side 11, 21 of the arrangement of the filter medium bodies 12, 32 for interlocking with the cast elements 20, 40.

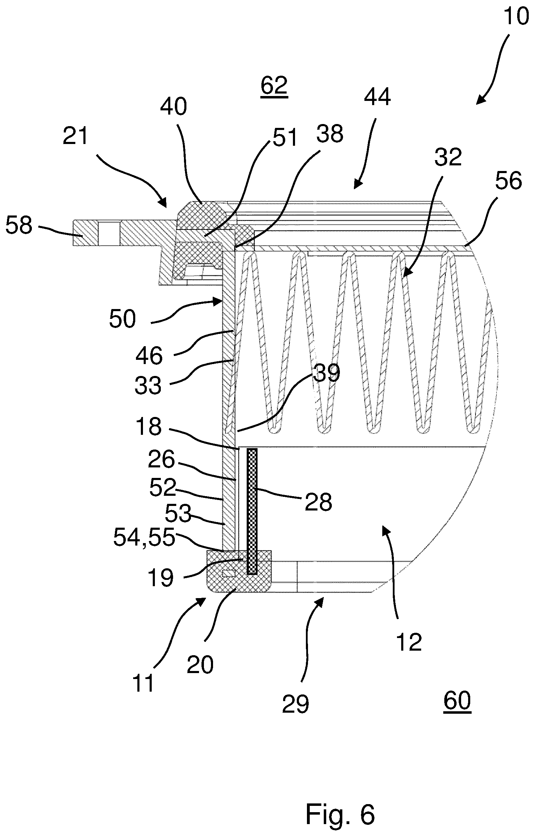

Figure 6 depicts an enlarged section of a cut view of a filter element 10 according to a further embodiment of the invention.

Both filter medium bodies 12, 32 are formed as a folded filter bellows. In the embodiment shown, end edges 23 of pleats 22 (Figure 4) of the upstream filter medium body 12 are sealed with an end edge bonding 28. The individual pleats 22 of the filter medium body 12 are not visible in this illustration, as they run perpendicular to the image plane.

The end edge bonding 28 is at least partially embedded into the upstream cast element 40, 20.

### Reference numerals

- 10: filter element
- 11: upstream side of arrangement
- 12: upstream filter medium body
- 18: downstream outer edge
- 19: upstream outer edge
- 20: upstream cast element
- 21: downstream side of arrangement
- 22: pleat
- 23: end edge
- 26: outer circumference
- 28: end edge bonding
- 29: upstream side
- 32: downstream filter medium body
- 33: pleat
- 38: downstream outer edge
- 39: outer edge
- 40: downstream cast element
- 44: downstream side
- 46: outer circumference
- 50: frame
- 51: collar
- 52: wall
- 53: protruding section
- 54: axial end
- 55: upstream edge
- 56: filter layer
- 58: bolting tab
- 60: raw side
- 62: clean side
- 80: axial direction
- 82: lateral direction
- 90: flow direction
- 100: filter system
- 102: fluid inlet
- 104: fluid outlet
- 110: filter housing
- 112: first housing part
- 114: second housing part
- 116: housing wall
- 118: housing wall
- 120: bolting tab
- 122: screw
- 124: screw dome
- 126: sealing area
- 128: end

## Claims

1. A flat-filter filter element (10) for filtering a fluid, in particular for filtering air, for a filter system (100), in particular for an air filter system of a fuel cell system, having an arrangement of at least two flat-filter medium bodies (12, 32) being arranged adjacent to each other in an axial direction (80), so that the fluid can flow through them one after the other in the axial direction (80),
wherein the flat-filter filter element (10) comprises an overmolded plastic frame (50) that is directly molded to an outer circumference (26, 46) of one of the filter medium bodies (32, 12), and
wherein the other one of the filter medium bodies (12, 32) is sealingly connected to the overmolded plastic frame (50) by means of a circumferential cast element (20).

2. The filter element according to claim 1, wherein the circumferential cast element (20) is arranged at an upstream side (11) of the arrangement of the filter medium bodies (12, 32) and/or wherein a further circumferential cast element (40) is arranged at a downstream side (21) of the arrangement of the filter medium bodies (12, 32), in particular wherein the cast elements (20, 40) are configured as circumferential sealing elements.

3. The filter element according to claim 1 or 2, wherein the overmolded plastic frame (50) comprises a protruding section (53) extending in the axial direction (80) from the filter medium body (32, 12), to which it is molded, to the other filter medium body (12, 32), the protruding section (53) surrounding the outer circumference (26, 46) of the other filter medium body (12, 32).

4. The filter element according to claim 3, wherein the circumferential cast element (20) is arranged at an upstream edge (55) of the protruding section (53) the overmolded plastic frame (50).

5. The filter element according to any one of the preceding claims, wherein the filter medium body (12) arranged outermost upstream in the arrangement of the filter medium bodies (12, 32) is connected to the circumferential cast element (20) at its upstream outer edge (19).

6. The filter element according to any one of the preceding claims, wherein a part of a pleat (33) of the filter medium body (32), to which the overmolded plastic frame (50) is directly molded to, is embedded in the overmolded plastic frame (50).

7. The filter element according to any one of the preceding claims, wherein an outwardly folded collar (51) is arranged at the frame (50) at a downstream side (21) of the arrangement of the filter medium bodies (12, 32).

8. The filter element according to claim 7, wherein the collar (51) is embedded in the downstream circumferential cast element (40).

9. The filter element according to any one of the preceding claims, wherein the frame (50) comprises breakthroughs in its circumference at least in the region of the upstream and/or downstream side (11, 21) of the arrangement of the filter medium bodies (12, 32).

10. The filter element according to any one of the preceding claims, wherein the outermost downstream filter medium body (32) comprises an additional filter layer (56) arranged on its downstream side (44).

11. The filter element according to any one of the preceding claims, wherein the outermost upstream filter medium body (12) is designed as a particle filter and/or wherein the outermost downstream filter medium body (32) is designed as an adsorption filter.

12. The filter element according to any one of the claims 2 to 11, wherein the downstream cast element (40) is designed as a circumferential sealing element for sealing between a raw side (60) and a clean side (62) when the filter element (10) is installed in a filter housing (110) of the filter system (100) as intended,
in particular wherein the downstream cast element (40) is arranged radially outside the at least two filter medium bodies (12, 32) and is configured for sealing between a first housing part (112) and a second housing part (114) of the filter housing (110) of the filter system (100).

13. The filter element according to any one of the preceding claims, wherein at least one of the two filter medium bodies (12, 32) is formed as a folded filter bellows,
wherein end edges (23) of pleats (22) of at least one of the two filter medium bodies (12, 32) are sealed with an end edge bonding (28),
wherein the end edge bonding (28) is at least partially embedded into the downstream and/or upstream cast element (40, 20).

14. A filter system (100) for filtering a fluid, in particular for filtering air, in particular of a fuel cell system, having a filter housing (110) with a fluid inlet (102) and a fluid outlet (104), and having at least one flat-filter filter element (10) according to any one of the preceding claims, the filter element (10) being arranged between the fluid inlet (102) and the fluid outlet (104),
wherein a sealing surface (126) of a first housing part (112) of the filter housing (110) abuts a downstream cast element (40) of the flat-filter filter element (10) arranged at the downstream filter medium body (32), and wherein a housing wall (118) of a second housing part (114) of the filter housing (110) is sealingly pressed against the cast element (40) on an opposite side of the sealing surface (126).

15. The filter system according to claim 14, wherein the circumferential frame element (50) comprises a collar (51) extending in a lateral direction (82) being embedded in the downstream cast element (40),
wherein the collar (51) with the cast element (40) is pressed between the sealing surface (126) and the end (128) of the housing wall (118).

16. A use of a flat-filter filter element (10) according to any one of claims 1 to 13 in a filter system (100) according to claim 14 or 15, for filtering a fluid, in particular for filtering air, in particular for an air filter system of a fuel cell system.

## Patentansprüche

1. Flachfilter-Filterelement (10) zum Filtern eines Fluids, insbesondere zum Filtern von Luft, für ein Filtersystem (100), insbesondere für ein Luftfiltersystem eines Brennstoffzellensystems, mit einer Anordnung von mindestens zwei in axialer Richtung (80) nebeneinander angeordneten Flachfiltermediumkörpern (12, 32), so dass das Fluid diese in axialer Richtung nacheinander durchströmen kann (80),
wobei das Flachfilter-Filterelement (10) einen umspritzten Kunststoffrahmen (50) umfasst, der direkt an einen Außenumfang (26, 46) eines der Filtermediumkörper (32, 12) angespritzt ist, und
wobei der andere der Filtermediumkörper (12, 32) mittels eines umlaufenden Gusselements (20) dichtend mit dem umspritzten Kunststoffrahmen (50) verbunden ist.

2. Filterelement nach Anspruch 1, wobei das umlaufende Gusselement (20) an einer stromaufwärtigen Seite (11) der Anordnung der Filtermedienkörper (12, 32) angeordnet ist und/oder wobei ein weiteres umlaufendes Gusselement (40) an einer stromabwärtigen Seite (21) der Anordnung der Filtermedienkörper (12, 32) angeordnet ist, insbesondere wobei die Gusselemente (20, 40) als umlaufende Dichtungselemente ausgebildet sind.

3. Filterelement nach Anspruch 1 oder 2, wobei der umspritzte Kunststoffrahmen (50) einen vorstehenden Abschnitt (53) umfasst, der sich in axialer Richtung (80) vom Filtermediumkörper (32, 12), an den er angespritzt ist, zum anderen Filtermediumkörper (12, 32) erstreckt, wobei der vorstehende Abschnitt (53) den Außenumfang (26, 46) des anderen Filtermediumkörpers (12, 32) umgibt.

4. Filterelement nach Anspruch 3, wobei das umlaufende Gusselement (20) an einer stromaufwärtigen Kante (55) des vorstehenden Abschnitts (53) des umspritzten Kunststoffrahmens (50) angeordnet ist.

5. Filterelement nach einem der obigen Ansprüche, wobei der in der Anordnung der Filtermediumkörper (12, 32) am weitesten stromaufwärts angeordnete Filtermediumkörper (12) an seiner stromaufwärts gelegenen Außenkante (19) mit dem umlaufenden Gusselement (20) verbunden ist.

6. Filterelement nach einem der obigen Ansprüche, wobei ein Teil einer Falte (33) des Filtermediumkörpers (32), an den der umspritzte Kunststoffrahmen (50) direkt angespritzt ist, in den umspritzten Kunststoffrahmen (50) eingebettet ist.

7. Filterelement nach einem der obigen Ansprüche, wobei ein nach außen gefalteter Kragen (51) am Rahmen (50) an einer stromabwärtigen Seite (21) der Anordnung der Filtermedienkörper (12, 32) angeordnet ist.

8. Filterelement nach Anspruch 7, wobei der Kragen (51) in das stromabwärts gelegene umlaufende Gussteil (40) eingebettet ist.

9. Filterelement nach einem der obigen Ansprüche, wobei der Rahmen (50) Durchbrüche in seinem Umfang zumindest im Bereich der stromaufwärtigen und/oder stromabwärtigen Seite (11, 21) der Anordnung der Filtermediumkörper (12, 32) umfasst.

10. Filterelement nach einem der obigen Ansprüche, wobei der stromabwärts äußerste Filtermediumkörper (32) eine zusätzliche Filterlage (56) aufweist, die an seiner stromabwärtigen Seite (44) angeordnet ist.

11. Filterelement nach einem der obigen Ansprüche, wobei der stromaufwärts äußerste Filtermediumkörper (12) als Partikelfilter ausgebildet ist und/oder wobei der stromabwärts äußerste Filtermediumkörper (32) als Adsorptionsfilter ausgebildet ist.

12. Filterelement nach einem der Ansprüche 2 bis 11, wobei das stromabwärts gelegene Gusselement (40) als umlaufendes Dichtungselement zum Abdichten zwischen einer Rohseite (60) und einer Reinseite (62) ausgebildet ist, wenn das Filterelement (10) bestimmungsgemäß in einem Filtergehäuse (110) des Filtersystems (100) eingebaut ist,
insbesondere wobei das stromabwärts gelegene Gusselement (40) radial außerhalb der mindestens zwei Filtermediumkörper (12, 32) angeordnet und zur Abdichtung zwischen einem ersten Gehäuseteil (112) und einem zweiten Gehäuseteil (114) des Filtergehäuses (110) des Filtersystems (100) ausgebildet ist.

13. Filterelement nach einem der obigen Ansprüche, wobei mindestens einer der beiden Filtermediumkörper (12, 32) als gefalteter Filterbalg ausgebildet ist,
wobei die Endkanten (23) der Falten (22) von mindestens einem der beiden Filtermediumkörper (12, 32) mit einer Endkantenverklebung (28) versiegelt sind,
wobei die Endkantenverklebung (28) zumindest teilweise in das stromabwärts und/oder stromaufwärts gelegene Gusselement (40, 20) eingebettet ist.

14. Filtersystem (100) zum Filtern eines Fluids, insbesondere zum Filtern von Luft, insbesondere eines Brennstoffzellensystems, mit einem Filtergehäuse (110) mit einem Fluideinlass (102) und einem Fluidauslass (104), und mit mindestens einem Flachfilter-Filterelement (10) nach einem der obigen Ansprüche, wobei das Filterelement (10) zwischen dem Fluideinlass (102) und dem Fluidauslass (104) angeordnet ist,
wobei eine Dichtfläche (126) eines ersten Gehäuseteils (112) des Filtergehäuses (110) an einem stromabwärts angeordneten Gusselement (40) des am stromabwärts gelegenen Filtermediumkörper (32) angeordneten Flachfilter-Filterelements (10) anliegt, und wobei eine Gehäusewand (118) eines zweiten Gehäuseteils (114) des Filtergehäuses (110) auf einer der Dichtfläche (126) gegenüberliegenden Seite dichtend gegen das Gusselement (40) gedrückt ist.

15. Filtersystem nach Anspruch 14, wobei das Umfangsrahmenelement (50) einen Kragen (51) umfasst, der sich in einer seitlichen Richtung (82) erstreckt und in das stromabwärts gelegene Gussteil (40) eingebettet ist.
wobei der Kragen (51) mit dem Gusselement (40) zwischen die Dichtfläche (126) und das Ende (128) der Gehäusewand (118) gepresst ist.

16. Verwendung eines Flachfilter-Filterelements (10) nach einem der Ansprüche 1 bis 13 in einem Filtersystem (100) nach einem der Ansprüche 14 oder 15 zum Filtern eines Fluids, insbesondere zum Filtern von Luft, insbesondere für ein Luftfiltersystem eines Brennstoffzellensystems.

## Revendications

1. Élément filtrant à filtre plat (10) destiné à filtrer un fluide, notamment pour filtrer de l'air, pour un système de filtre (100), notamment pour un système de filtre à air d'un système de pile à combustible, ayant un agencement d'au moins deux corps de milieu filtrant plats (12, 32) disposés de manière adjacente l'un à l'autre dans une direction axiale (80), de sorte que le fluide peut s'écouler à travers eux l'un après l'autre dans la direction axiale (80),
dans lequel l'élément filtrant à filtre plat (10) comprend un cadre en plastique surmoulé (50) qui est directement moulé sur une circonférence extérieure (26, 46) de l'un des corps de milieu filtrant (32, 12), et
dans lequel l'autre des corps de milieu filtrant (12, 32) est relié de manière étanche au cadre en plastique surmoulé (50) au moyen d'un élément coulé circonférentiel (20).

2. Élément filtrant selon la revendication 1, dans lequel l'élément coulé circonférentiel (20) est disposé sur un côté amont (11) de l'agencement des corps de milieu filtrant (12, 32) et/ou dans lequel un autre élément coulé circonférentiel (40) est disposé sur un côté aval (21) de l'agencement des corps de milieu filtrant (12, 32), notamment dans lequel les éléments coulés (20, 40) sont configurés comme des éléments d'étanchéité circonférentiels.

3. Élément filtrant selon la revendication 1 ou 2, dans lequel le cadre en plastique surmoulé (50) comprend une section saillante (53) s'étendant dans la direction axiale (80) depuis le corps de milieu filtrant (32, 12), auquel il est moulé, vers l'autre corps de milieu filtrant (12, 32), la section en saillie (53) entourant la circonférence extérieure (26, 46) de l'autre corps de milieu filtrant (12, 32).

4. Élément filtrant selon la revendication 3, dans lequel l'élément coulé circonférentiel (20) est disposé au niveau d'un bord amont (55) de la section en saillie (53) du cadre en plastique surmoulé (50).

5. Élément filtrant selon l'une quelconque des revendications précédentes, dans lequel le corps de milieu filtrant (12) disposé le plus en amont dans l'agencement des corps de milieu filtrant (12, 32) est relié à l'élément coulé circonférentiel (20) au niveau de son bord extérieur amont (19).

6. Élément filtrant selon l'une quelconque des revendications précédentes, dans lequel une partie d'un pli (33) du corps de milieu filtrant (32), sur lequel le cadre en plastique surmoulé (50) est directement moulé, est incorporée dans le cadre en plastique surmoulé (50).

7. Élément filtrant selon l'une quelconque des revendications précédentes, dans lequel un collier replié vers l'extérieur (51) est disposé au niveau du cadre (50) sur un côté aval (21) de l'agencement des corps de milieu filtrant (12, 32).

8. Élément filtrant selon la revendication 7, dans lequel le collier (51) est incorporé dans l'élément coulé circonférentiel aval (40).

9. Élément filtrant selon l'une quelconque des revendications précédentes, dans lequel le cadre (50) comprend des passages dans sa circonférence au moins dans la région du côté amont et/ou aval (11, 21) de l'agencement des corps de milieu filtrant (12, 32).

10. Élément filtrant selon l'une quelconque des revendications précédentes, dans lequel le corps de milieu filtrant (32) le plus en aval comprend une couche filtrante supplémentaire (56) disposée sur son côté aval (44).

11. Élément filtrant selon l'une quelconque des revendications précédentes, dans lequel le corps de milieu filtrant (12) le plus en amont est conçu comme un filtre à particules et/ou dans lequel le corps de milieu filtrant le plus en aval (32) est conçu comme un filtre à adsorption.

12. Élément filtrant selon l'une quelconque des revendications 2 à 11, dans lequel l'élément coulé aval (40) est conçu comme un élément d'étanchéité circonférentiel pour assurer l'étanchéité entre un côté brut (60) et un côté pur (62) lorsque l'élément filtrant (10) est installé comme prévu dans un boîtier de filtre (110) du système de filtration (100),
notamment dans lequel l'élément coulé aval (40) est disposé radialement à l'extérieur des corps de milieu filtrant (12, 32), au moins au nombre de deux, et est configuré pour assurer l'étanchéité entre une première partie de boîtier (112) et une deuxième partie de boîtier (114) du boîtier de filtre (110) du système de filtration (100).

13. Élément filtrant selon l'une quelconque des revendications précédentes, dans lequel au moins l'un des deux corps de milieu filtrant (12, 32) est formé comme un soufflet de filtre plié.
dans lequel les bords d'extrémité (23) des plis (22) d'au moins l'un des deux corps de milieu filtrant (12, 32) sont scellés à l'aide d'un collage des bords d'extrémité (28),
dans lequel le collage des bords d'extrémité (28) est au moins partiellement incorporé dans l'élément coulé aval et/ou amont (40, 20).

14. Système de filtre (100) pour filtrer un fluide, notamment pour filtrer de l'air, notamment d'un système de pile à combustible, ayant un boîtier de filtre (110) avec une entrée de fluide (102) et une sortie de fluide (104), et ayant au moins un élément filtrant à filtre plat (10) selon l'une quelconque des revendications précédentes, l'élément filtrant (10) étant disposé entre l'entrée de fluide (102) et la sortie de fluide (104),
dans lequel une surface d'étanchéité (126) d'une première partie de boîtier (112) du boîtier de filtre (110) vient en butée contre un élément coulé aval (40) de l'élément filtrant à filtre plat (10) disposé au niveau du corps de milieu filtrant aval (32), et dans lequel une paroi de boîtier (118) d'une deuxième partie de boîtier (114) du boîtier de filtre (110) est pressée de manière étanche contre l'élément coulé (40) sur un côté opposé de la surface d'étanchéité (126).

15. Système de filtre selon la revendication 14, dans lequel l'élément de cadre circonférentiel (50) comprend un collier (51) s'étendant dans une direction latérale (82) et incorporé dans l'élément coulé aval (40),
dans lequel le collier (51) avec l'élément coulé (40) est pressé entre la surface d'étanchéité (126) et l'extrémité (128) de la paroi de boîtier (118).

16. Utilisation d'un élément filtrant à filtre plat (10) selon l'une quelconque des revendications 1 à 13 dans un système de filtre (100) selon la revendication 14 ou 15, pour filtrer un fluide, notamment pour filtrer de l'air, notamment pour un système de filtre à air d'un système de pile à combustible.
